# EUROPEAN PATENT SPECIFICATION

(11) **EP 0 358 256 B1**
(45) Date of publication and mention of the grant of the patent: **23.06.1993**
(21) Application number: 89202113.0
(22) Date of filing: 18.08.1989
(51) Int. Cl.: F16J 15/10, B28B 23/00

(54) **A sealing and protective device for pipes**
Dichtung und Schutzvorrichtung für Rohre
Dispositif d'étanchéité et de protection pour tuyaux

(30) Priority: 05.09.1988 SE 8803108
(43) Date of publication of application: 14.03.1990
(73) Proprietor: Forsheda AB, S-330 12 Forsheda (SE)
(72) Inventor: Nordin, Olof, S-331 51 Värnamo (SE)
(74) Representative: Linde, Leif

(56) References cited:
- DE-C- 432 345
- GB-A- 2 033 293
- GB-A- 2 108 421
- US-A- 4 084 828
- US-A- 4 342 464
- US-A- 4 394 025

## Description

The present invention relates to a sealing and protective device for pipes, the sealing and protective device being adapted to be moulded into a substantially cylindrical surface portion of the pipe in the area of an end portion thereof in connection with the moulding of the pipe.

When moulding concrete pipes it is known in the art to provide the pipe with a sealing and protective device comprising a sealing ring with a sealing portion which subsequently to the moulding of the sealing and protective device into the cylindrical surface portion projects in radial direction from said surface portion and is adapted to be sealingly compressed in an annular space established when the pipe end portion is concentrically connected with and end portion of another pipe. A previously known sealing and protective device of this kind comprises a protective element which subsequently to the moulding of the sealing and protective device into the substantially cylindrical surface portion of the pipe is positioned axially inside the sealing portion in respect of the end surface of the pipe end portion and is adapted to prevent access of soil and water to the area axially inside the sealing portion during transportation and storage of the pipe. Before the pipe end portion is concentrically connected with another pipe the protective element is removed making it possible for the sealing portion during the compression to be partially displaced into the space previously occupied by the protective element.

Previously known devices of this kind are described in the two Swedish patents Nos 7809451-3 (=GB-A-2033293) and 8105254-0 (=GB-A-2108421). In accordance with these two patents the sealing and protective device is constituted by two separate portions, a sealing ring and an annular protective element which in connection with the moulding of the concrete pipe are positioned axially adjacent each other on a bottom ring which is adapted to mould the inner surface of a socket of the concrete pipe.

There are a number of disadvantages of the previously known sealing and protective devices. Thus, the protective element of the previously known device has a complicated shape which makes the manufacturing of the protective elements which usually consists of cellular plastic difficult and expensive. Another drawback is that the concrete subjects the protective element to a direct influence when the pipe is moulded which may cause destruction of the cellular plastic ring by impression or compression of the ring. In previously known sealing and protective devices it is also a drawback that the sealing ring and the protective element form an interface which is accessible to the concrete material during the moulding. This often causes that the concrete material penetrates between the protective element and the sealing ring which in turn may cause difficulties in the removal of the protective element and also may jeopardize the correct sealing function of the sealing ring.

The object of the invention is to provide a sealing and protective device of the kind described above in which the above drawbacks have been obviated.

In order to comply with this object the sealing and protective device according to the invention is characterized in that the sealing ring has a further portion being formed in one unit with the sealing portion and extending axially from the sealing portion at the opposite side of the pipe end portion, in that the sealing portion and the further portion form a peripheral groove in which the protective element is positioned and in that the sealing ring and the protective element are connected with each other for constituting a connected unit already before the moulding of the sealing and protective device into the substantially cylindrical portion of the pipe.

It is preferred that the part of the sealing ring connecting the sealing portion and the further portion, which part forms a bottom of the peripheral groove for receiving the protective element, is at least partially constituted by an elastic portion constituting a thin wall.

It is suitable that the further portion constitutes a shock absorbing portion which is adapted to prevent direct engagement between the concrete material of the pipe end portions after a sealing and protective device has been moulded into the substantially cylindrical surface portion of the pipe and the pipe end portion has been jointed with the end portion of another pipe.

Thus, the sealing and protective device according to the invention constitutes a premanufactured unit prepared in a factory and delivered to the moulding factories where the pipes are manufactured. Thereby it is possible to obviate the complicated mounting of the sealing ring and the protective element on the bottom ring which is used for the moulding of concrete pipes. There is also provided a correct relationship between the sealing portion and the protective element so that the correct function thereof is guaranteed.

In the sealing and protective device according to the invention the risk of penetration of concrete between the sealing portion and the protective element is obviated. It is also possible to give the protective element a simple and cheap shape, for example a rectangular cross sectional shape. This means that it is possible to manufacture the protective element from a cellular plastic strip having a rectangular cross section.

In the sealing and protective device according to the invention a direct contact between a protective element consisting of cellular plastic and the concrete is obviated which obviates the risk of cellular plastic damages.

The invention is described in the following with reference to the accompanying drawings.
Fig. 1 is an axial section of an annular sealing and protective device according to the invention.
Fig. 2 illustrates the axial section of the sealing and protective device positioned on a bottom ring which is a part of a mould for manufacturing a concrete pipe.
Fig. 3 illustrates the section of the sealing and protective device moulded into the concrete pipe.
Fig. 4 illustrates the section of the sealing and protective device moulded into the concrete pipe subsequent to the removal of the protective element of the device.
Fig. 5 illustrates a section of pipe joint including the device according to the invention.

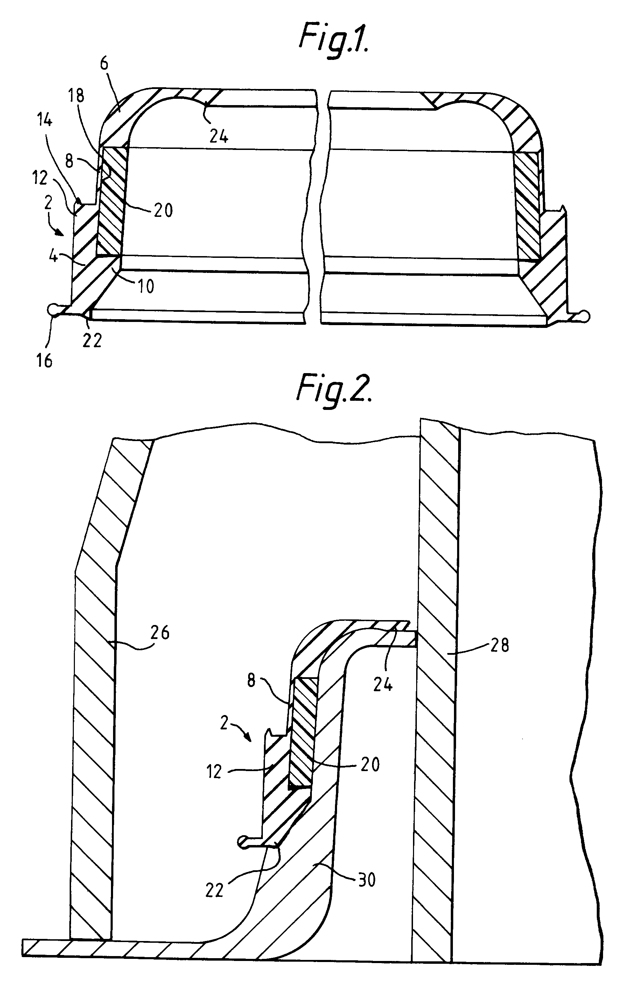

The sealing and protective device according to the invention shown in Fig. 1 comprises an annular portion 2 consisting of elastic material, preferably rubber. The annular portion 2 comprises a sealing ring 4 and a shock absorbing portion 6 which are connected with each other by means of an intermediate, thin wall 8 so as to constitute one single unit.

The sealing ring 4 comprises a sealing portion 10 projecting radially inwards and a retainer portion 12 provided with projecting fastening portions 14 and 16.

The annular portion 2 forms an inwards open groove 18 receiving an annular protective element 20 occupying the groove and preferably consisting of cellular plastic. The protective element 20 may also consist of very elastic material. It is important that the protective element 20 consists of a material which allows that the protective element 20 can without problems be removed from the inwards open groove 18. Preferably the groove 18 is so dimensioned in relation to the protective element 20 that the side surfaces of the groove formed by the sealing portion 10 and the shock absorbing portion 6 are sealingly pressed against the opposite surface of the protective element 20. This pressing action is preferably provided by the fact that the positioning of the protective element 20 and the groove 18 requires a certain elastic elongation of the thin wall 8.

At its edge portions the annular portion 2 has peripheral projections 22 and 24, respectively, which are adapted to secure the sealing of the annular portion 2 in relation to a bottom ring which, as shown in Fig. 2, is used for moulding the sealing and protective element into a concrete pipe.

A concrete pipe having a socket into which a sealing and protective device according to the invention shall be moulded is moulded by means of a mould which as appears from Fig. 2 in a conventional way consists of two concentric mould portions 26 and 28 and a bottom ring 30 for the moulding of the inner surface of the socket portion of the pipe add the end surface thereof. Before the concrete is poured into the mould, the sealing and protective device according to the invention is positioned on the bottom ring with a radial tensioning which preferably amounts 3 - 5%. After the tensioning of the ring onto the bottom ring 30 the projections 22 and 24 provide for a secure sealing of the sealing and protective device in relation to the bottom ring.

At the surface of the sealing and protective device turned from the bottom ring 30 the sealing and protective device according to the invention forms a continuous surface formed by the unitary annular portion 2 which provides that the device according to the invention does not provide any interface between different portions at which concrete can penetrate during the moulding.

When the concrete is poured into the mould for providing the concrete pipe the sealing and protective device is moulded into the socket of the pipe at the inner surface of the socket. It appears that the protective element 20 which consists of cellular plastic and is relatively sensitive to the influence of concrete is not directly contacted by the concrete during the moulding operation which obviates the risk of impression of the cellular plastic material and the like. Thus, the surface pressure of the concrete will be distributed by the rubber material of the thin wall 8 and the retainer portion 12 of the sealing ring 4 positioned between the protective element 28 and the concrete.

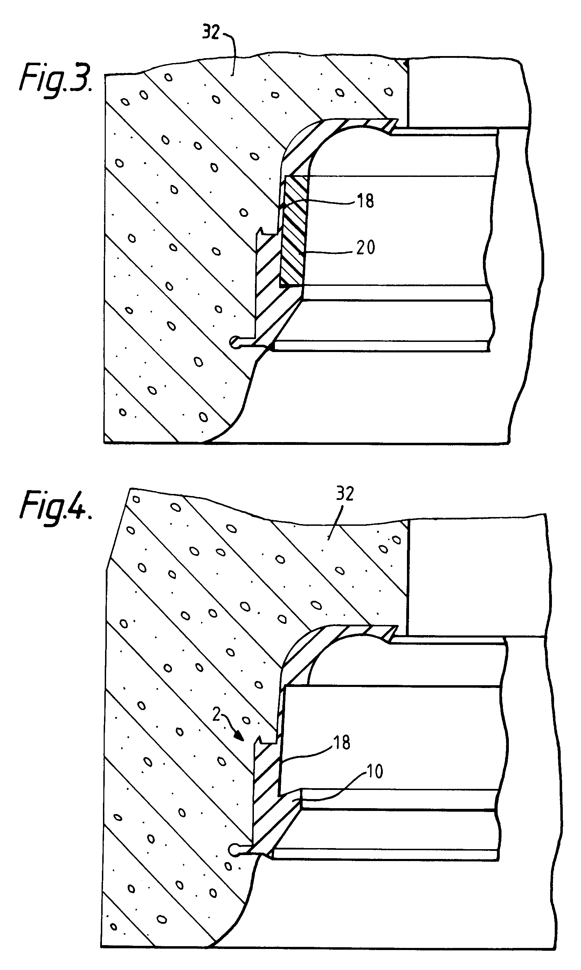

Fig. 3 illustrates the end portion of a concrete pipe with the sealing and protective device according to the invention moulded into said end portion of the concrete pipe after the stripping of the mould. As appears from Fig. 3 the sealing and protective device forms a continuous substantially flat surface at the inner side of the socket. Thus, the protective element 20 of the sealing and protective device forms during transportation and storage of the pipe 32 a protection preventing ice and soil from being collected in the groove 18 in which the protective element 20 is positioned. Thus, the protective element 20 shall remain in the pipe socket until the jointing with another pipe shall take place by introducing the spigot end of this pipe into the socket of the pipe 32.

Fig. 4 illustrates the pipe end portion after the removal of the protective element 20. Thus, in this condition the pipe 32 is ready for being jointed with another pipe, the spigot end of this other pipe being introduced into the socket of the pipe 32. Because of the fact that the protective element 20 does not contact the concrete material of the pipe 32 but only the rubber material of the annular portion 2 it is very easy to remove the protective element 20. In addition thereto the groove 18 which is adapted after the introduction of the spigot end into the socket of the pipe 32 to receive a part of the sealing portion 2 as well as to allow that the pipes are positioned at a certain angle in relation to each other is retained completely clean. In previously known sealing and protective devices for pipes in which the protective element is in direct contact with the concrete it is common that there are pebbles and small pieces of concrete in the groove after the removal of the protective element which may lead to problems with regard to tightness and the positioning of the pipes at an angle in relation to each other.

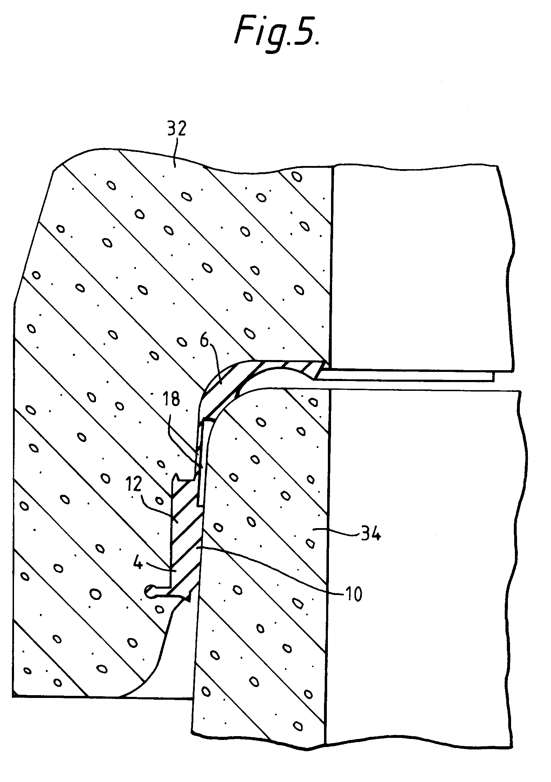

Fig. 5 illustrates the pipe 32 after introduction of a spigot end 34 for providing a pipe joint. As appears from Fig. 5 the sealing portion 10 is compressed between the retainer portion 12 of the sealing ring 4 and the outer surface of the spigot end 34. Thus, the sealing portion 10 has in connection with the pipe jointing been partly displaced into the groove 18 in which the protective element 20 was previously positioned. As appears from Fig. 5 the shock absorbing portion 6 prevents a direct contact between the concrete material of the spigot end 34 and the pipe 32 which of course obviates the risk of damages on the concrete material. In addition thereto the portion 6 prevents a so called beam action, i.e. it is prevented that a line of pipes acts as a rigid beam. Such beam action leads to great local stresses on the concrete pipes included in the line and is obviated by the fact that the pipes can move individually within certain limits when being subjected to loads.

The invention can be modified within the scope of the following claims. For example it is possible to provide the sealing portion 10 with peripheral grooves in order to improve the sealing effect. In connection with larger pipe dimensions the corresponding larger dimensions of the sealing and protective device it is possible to provide the inner surface of the protective element 20 with axially extending recesses which facilitate that a stright blank is formed to annular shape and allow folding in order to facilitate the transportation of the blanks.

## Claims

1. A sealing and protective device for pipes adapted to be moulded into a substantially cylindrical surface portion of the pipe in the area of an end portion thereof in connection with the moulding of the pipe, comprising a sealing ring (4) with a sealing portion (10) which projects radially from the substantially cylindrical surface portion of the pipe after the sealing and protective device has been moulded into said surface portion and which is adapted to be sealingly compressed in an annular space which is established when the pipe end portion is jointed with an end portion of an other pipe concentric therewith and further comprising a protective element (20) which is positioned axially inside the sealing portion from the end surface of the pipe end portion and is adapted to prevent access of soil and water to the area axially inside the sealing portion during transportation and storage of the pipe and is adapted to be removed before the pipe end portion is connected with the end portion of an other pipe, **characterized** in that the sealing ring (4) has a further portion (6) being formed in one unit with the sealing portion (10) and extending axially from the sealing portion (10) at the opposite side of the pipe end portion, in that the sealing portion (10) and the further portion (6) form a peripheral groove (18) in which the protective element (20) is positioned and in that the sealing ring (4) and the protective element (20) are connected with each other for constituting a connected unit already before the moulding of the sealing and protective device into the substantially cylindrical portion of the pipe.

2. A sealing and protective device as claimed in claim 1, **characterized** in that the part of the sealing ring (4) connecting the sealing portion (10) and the further portion (6), which part (8) forms a bottom of the peripheral groove (18) for receiving the protective element (20), is at least partially constituted by an elastic portion constituting a thin wall (8).

3. A sealing and protective device as claimed in claim 1 or 2, **characterized** in that the further portion (6) constitutes a shock absorbing portion (6) which is adapted to prevent direct engagement between the material of the pipe end portions subsequent to the moulding of the sealing and protective device into the substantially cylindrical surface portion of the pipe and the jointing of the pipe end portion with an end portion of an other pipe.

4. A sealing and protective device as claimed in claim 3, **characterized** in that the sealing portion (10), the protective element (20) and the shock absorbing portion (6) form a continuous, substantially plain surface at the side remote from the substantially cylindrical surface portion of the pipe after the sealing and protective device has been moulded into said surface portion.

5. A sealing and protective device as claimed in any of the preceding claims, **characterized** in that the protective element (20) consists of a ring having a substantially rectangular cross sectional shape.

6. A sealing and protective device as claimed in any of the preceding claims, **characterized** in that the protective element (20) consists of cellular plastic.

7. A sealing and protective device as claimed in any of the preceding claims, the device being adapted to be moulded into the inner surface of a socket when moulding a concrete pipe, the mould portion for moulding the inner surface of the socket being constituted by a bottom ring, **characterized** in that the sealing and protective device is adapted to be positioned on the bottom ring (30) in advance of the moulding while substantially completely covering the bottom ring.

8. A sealing and protective device as claimed in claim 7, **characterized** in that the side edges of the sealing and protective device adapted to engage the bottom ring (30) are formed with projections (22, 24) for obviating the risk of penetration of concrete between the sealing and protective device and the bottom ring.

## Patentansprüche

1. Versiegelungs- und Schutzvorrichtung für Röhren, die geeignet ist, in einen angenähert zylindrischen Oberflächenteil der Röhre im Bereich eines Endstückes in Verbindung mit dem Gießen der Röhre gegossen zu werden, die einen Versiegelungsring (4) mit einem Versiegelungselement (10) enthält, das radial von dem angenähert zylindrischen Oberflächenteil der Röhre vorsteht, nachdem die Versiegelungs- und Schutzvorrichtung in dem besagten Oberflächenteil gegossen worden ist, und das geeignet ist, versiegelnd in einen ringförmigen Zwischenraum, der gebildet wird, wenn das Röhrenendstück mit einem Endstück einer anderen Röhre konzentrisch verbunden wird, gedrückt zu werden und die weiterhin ein Schutzelement (20) enthält, das axial innerhalb des Versiegelungselementes von der Endfläche des Röhrenendstückes angeordnet ist und geeignet ist, den Eintritt von Schmutz und Wasser in den Bereich axial innerhalb des Versiegelungselementes während Transport und Lagerung der Röhre zu verhindern, und das geeignet ist, entfernt zu werden, bevor das Röhrenendstück mit dem Endstück einer anderen Röhre verbunden wird,
**dadurch gekennzeichnet,**
daß der Versiegelungsring (4) einen weiteren Bestandteil (6) hat, der in einer Einheit mit dem Versiegelungselement (10) ausgebildet ist und sich axial von dem Versiegelungselement (10) an der dem Röhrenendstück gegenüberliegenden Seite ausdehnt, daß das Versiegelungselement (10) und der weitere Bestandteil (6) eine periphere Nut (18) bilden, in der das Schutzelement (20) angeordnet ist und daß der Versiegelungsring (4) und das Schutzelement (20) miteinander verbunden sind, um schon vor dem Gießen der Versiegelungs- und Schutzvorrichtung in den angenähert zylindrischen Teil der Röhre eine verbundene Einheit zu bilden.

2. Versiegelungs- und Schutzvorrichtung wie in Anspruch 1 beansprucht,
**dadurch gekennzeichnet**,
daß der Teil des Versiegelungsringes (4), der das Versiegelungselement (10) und den weiteren Bestandteil (6) verbindet, welcher Teil (8) einen Boden der peripheren Nut (18) bildet, um das Schutzelement (20) aufzunehmen, zumindest teilweise aus einem elastischen Anteil besteht, der eine dünne Wand (8) bildet.

3. Versiegelungs- und Schutzvorrichtung wie in Anspruch 1 oder 2 beansprucht,
**dadurch gekennzeichnet**,
daß der weitere Bestandteil (6) einen stoßdämpfenden Bestandteil (6) bildet, der geeignet ist, einen direkten Zusammenstoß zwischen dem Material der Röhrenendstücke nach dem Gießen der Versiegelungs- und Schutzvorrichtung in den angenähert zylindrischen Oberflächenteil der Röhre und dem Verbinden des Röhrenendstückes mit dem Endstück einer anderen Röhre zu verhindern.

4. Versiegelungs- und Schutzvorrichtung wie in Anspruch 3 beansprucht,
**dadurch gekennzeichnet**,
daß das Versiegelungselement (10), das Schutzelement (20) und der stoßdämpfende Bestandteil (6) eine stetige angenähert ebene Oberfläche auf der dem angenähert zylindrischen Oberflächenteil der Röhre abgewandten Seite bilden, nachdem die Versiegelungs- und Schutzvorrichtung in den besagten Oberflächenteil gegossen worden ist.

5. Versiegelungs- und Schutzvorrichtung nach einem der vorangehenden Ansprüche,
**dadurch gekennzeichnet,**
daß das Schutzelement (20) aus einem Ring besteht, der eine angenähert rechteckige Querschnittsfläche hat.

6. Versiegelungs- und Schutzvorrichtung nach einem der vorangehenden Ansprüche,
**dadurch gekennzeichnet,**
daß das Schutzelement (20) aus zellularem Kunststoff besteht.

7. Versiegelungs- und Schutzvorrichtung nach einem der vorangehenden Ansprüche, wobei die Vorrichtung geeignet ist, beim Gießen einer Betonröhre in die innere Oberfläche eines Halses gegossen zu werden und das Formteil zum Gießen der inneren Oberfläche des Halses von einem Deckring gebildet wird,
**dadurch gekennzeichnet**,
daß die Versiegelungs- und Schutzvorrichtung geeignet ist, auf dem Deckring (30) vor dem Gießen positioniert zu werden, indem sie den Deckring nahezu vollständig umhüllt.

8. Versiegelungs- und Schutzvorrichtung wie in Anspruch 7 beansprucht,
**dadurch gekennzeichnet,**
daß die Seitenkanten der Versiegelungs- und Schutzvorrichtung, die bestimmt sind, den Deckring (30) zu belegen, mit Vorsprüngen (22,24) ausgebildet sind, um das Risiko des Eindringens von Beton zwischen der Versiegelungs- und Schutzvorrichtung und dem Deckring zu verhindern.

## Revendications

1. Dispositif d'étanchéité et de protection pour tuyaux adapté pour être moulé, c'est à dire incorporé par moulage dans une partie de surface sensiblement cylindrique du tuyau dans la zone d'une partie d'extrémité de ce dernier en liaison avec le moulage du tuyau, comprenant une bague d'étanchéité (4) munie d'une partie d'étanchéité (10) qui fait saillie radialement de la partie de surface sensiblement cylindrique du tuyau après que le dispositif d'étanchéité et de protection a été moulé dans ladite partie de surface et qui est adapté pour être comprimé de façon étanche dans un espace annulaire établi lorsque la partie d'extrémité de tuyau est assemblée avec une partie d'extrémité d'un autre tuyau qui lui est concentrique et comprend, en outre, un élément protecteur (20) qui est placé axialement à l'intérieur de la partie d'étanchéité depuis la surface d'extrémité de la partie d'extrémité de tuyau et qui est adapté pour empêcher un accès de la terre et de l'eau dans la zone située axialement à l'intérieur de la partie d'étanchéité pendant le transport et le stockage du tuyau et est adapté pour être enlevé avant que la partie d'extrémité du tuyau ne soit accouplée à la partie d'extrémité d'un autre tuyau, caractérisé en ce que la bague d'étanchéité (4) comporte une partie supplémentaire (6) faisant corps avec la partie d'étanchéité (10) et s'étendant axialement depuis la partie d'étanchéité (10) sur le côté opposé de la partie d'extrémité de tuyau, en ce que la partie d'étanchéité (10) et la partie supplémentaire (6) forment une rainure périphérique (18) dans laquelle l'élément protecteur (20) est disposé et en ce que la bague d'étanchéité (4) et l'élément protecteur (20) sont assemblés l'un à l'autre pour constituer un ensemble assemblé déjà avant le moulage du dispositif d'étanchéité et de protection dans la partie sensiblement cylindrique du tuyau.

2. Dispositif d'étanchéité et de protection selon la revendication 1, caractérisé en ce que la partie de la bague d'étanchéité (4) reliant la partie d'étanchéité (10) et la partie supplèmentaire (6) laquelle partie (8) forme le fond de la rainure périphérique (18) destinée à recevoir l'élément protecteur (20), constitué, au moins partiellement, par une partie élastique conformant une mince paroi (8).

3. Dispositif d'étanchéité et de protection selon la revendication 1 ou 2, caractérisé en ce que la partie supplèmentaire (6) constitue une partie (6) qui absorbe les chocs et qui est adaptée pour empêcher un contact direct entre le matériau des parties d'extrémité du tuyau après le moulage du dispositif d'étanchéité et de protection dans la partie de surface sensiblement cylindrique du tuyau et l'assemblage de la partie d'extrémité de tuyau avec une partie d'extrémité d'un autre tuyau.

4. Dispositif d'étanchéité et de protection selon la revendication 3, caractérisé en ce que la partie d'étanchéité (10), l'élément protecteur (20) et la partie (6) absorbant les chocs forment une surface continue sensiblement plate sur le côté située à l'opposé de la partie de surface sensiblement cylindrique du tuyau après que le dispositif d' étanchéité et de protection a été moulé dans ladite partie de surface.

5. Dispositif d'étanchéité et de protection selon l'une quelconque des revendications précédentes, caractérisé en ce que l'élément protecteur (20) consiste en une bague ayant une forme de section droite sensiblement rectangulaire.

6. Dispositif d'étanchéité et de protection selon l'une quelconque des revendications précédentes, caractérisé en ce que l'élément protecteur (20) est constitué par une matière plastique cellulaire.

7. Dispositif d'étanchéité et de protection selon l'une quelconque des revendications précédentes, le dispositif étant adapté pour être moulé dans la surface intérieure d'un embout femelle quand on moule un tuyau en béton, la partie de moule servant à mouler la surface intérieure de l'embout femelle étant constituée par une bague de fond, caractérisé en ce que le dispositif d'étanchéité et de protection est adapté pour être positionné sur la bague de fond (30) avant le moulage tout en recouvrant de façon sensiblement complète la bague de fond.

8. Dispositif d'étanchéité et de protection selon la revendication 7, caractérisé en ce que les bords latéraux du dispositif d'étanchéité et de protection adapté pour être en contact avec la bague de fond (30) comporte des saillies (22, 24) servant à éliminer le risque d'une pénétration de béton entre le dispositif d'étanchéité et de protection et la bague de fond.
